# EUROPÄISCHE PATENTSCHRIFT

(11) **EP 2 625 219 B1**
(45) Veröffentlichungstag und Bekanntmachung des Hinweises auf die Patenterteilung: **11.07.2018**
(21) Anmeldenummer: 11815754.4
(22) Anmeldetag: 07.10.2011
(51) Int. Cl.: C08J 9/32

(54) **DICHTUNGS- ODER DÄMPFUNGSPROFIL**
SEALING OR DAMPING PROFILED ELEMENT
PROFILÉ D'ÉTANCHÉITÉ OU D'AMORTISSEMENT

(30) Priorität: 08.10.2010 DE 102010047772
(43) Veröffentlichungstag der Anmeldung: 14.08.2013
(73) Patentinhaber: Dätwyler Sealing Technologies Deutschland GmbH, 99880 Waltershausen (DE)
(72) Erfinder: HÖFT, Heiko, 21224 Rosengarten OT Eckel (DE); ARTUS, Andreas, 99891 Tabarz (DE)
(74) Vertreter: Stüven, Ralf
(86) Internationale Anmeldenummer: PCT/DE2011/050041
(87) Internationale Veröffentlichungsnummer: WO 2012/062294

(56) Entgegenhaltungen:
- US-A- 6 132 847
- US-A1- 2005 031 811

## Beschreibung

Die Erfindung betrifft ein Dichtungs- oder Dämpfungsprofil für den Einsatz beim Tunnelbau, Tiefbau und/oder Gleisoberbau, sowie ein Verfahren zu dessen Herstellung.

Dichtungs- oder Dämpfungsprofile für den Einsatz beim Tunnelbau, Tiefbau, Gleisoberbau und/oder bei Fensterfassaden sind seit langem bekannt. Diese Dichtungs- oder Dämpfungsprofile, insbesondere solche für den Tunnel-, Tief- und Gleisoberbau, sind regelmäßig aus einem quervernetzten Elastomer gefertigt, um den vergleichsweise hohen mechanischen und sonstigen Belastungen standzuhalten. Ein häufiger Nachteil dieser bekannten Dichtungs- oder Dämpfungsprofile ist jedoch das relativ hohe spezifische Gewicht und/oder die hohen maximalen Rückstellkräfte, die bei starken Verpressungen, z.B. in Eckbereichen von Fugendichtungen, in denen keine Hohlräume ausgebildet werden können, auftreten können. US 6 132 847 A offenbart extrudierte Schaumgummiprodukte, die beispielsweise als Fensterdichtungen verwendet werden. Aufgabe der vorliegenden Erfindung ist es, ein Dichtungs- oder Dämpfungsprofil für den Einsatz beim Tunnelbau, Tiefbau und/oder Gleisoberbau, bereitzustellen, das die Nachteile des Standes der Technik nicht aufweist, insbesondere bei im Wesentlichen unveränderter Dichtfunktion ein vermindertes spezifisches Gewicht und/oder eine verminderte maximale Rückstellkraft bei starker Verpressung aufweist. Insbesondere ist es Aufgabe der vorliegenden die Erfindung ein Dichtungs- oder Dämpfungsprofil für den Einsatz beim Tunnelbau, Tiefbau und/oder Gleisoberbau, bereitzustellen, das im Vergleich zum Stand der Technik bei gleicher Verpressung eine geringere maximale Rückstellkraft oder bei gleichbleibender maximaler Rückstellkraft eine stärkere Verpressung erlaubt.

Die erfindungsgemäße Aufgabe wird gelöst durch die Gegenstände der nebengeordneten Ansprüche.

In einem ersten Aspekt stellt die Erfindung ein Dichtungs- oder Dämpfungsprofil für den Einsatz beim Tunnelbau, Tiefbau und/oder Gleisoberbau, bereit, wobei das Dichtungs- oder Dämpfungsprofil aus einem quervernetzten Elastomer besteht und einen Anteil von maximal zwei Gewichtsprozent elastischer Mikrosphären aufweist.

Es hat sich überraschend herausgestellt, dass ein Dichtungs- oder Dämpfungsprofil, wie es grundsätzlich im Stand der Technik für den Einsatz beim Tunnelbau, Tiefbau, Gleisoberbau und/oder bei Fensterfassaden bekannt ist, durch Einmischen von elastischen Mikrosphären deutlich verbessert werden kann. So wird durch den Einsatz der Mikrosphären das spezifische Gewicht des Dichtungs- oder Dämpfungsprofils reduziert, weil ein Teil des Elastomervolumens, z.B. 10-30%, durch die Mikrosphären-Hohlräume ersetzt werden kann. Durch Verwendung elastischer Mikrosphären können die mechanischen Eigenschaften des Dichtungs- oder Dämpfungsprofils, insbesondere die Elastizität und Dichtfunktion, weitgehend erhalten werden. Es hat sich dabei herausgestellt, dass die Rückstellkräfte bei starker Verpressung des erfindungsgemäßen Dichtungs- oder Dämpfungsprofils nicht so stark ansteigen wie bei Dichtungs- oder Dämpfungsprofilen gemäß dem Stand der Technik. Dies ist insbesondere von Vorteil bei Dichtungs- oder Dämpfungsprofilen bzw. Bereichen eines Dichtungs- oder Dämpfungsprofils, die starken Verpressungen ausgesetzt sein können, z.B. bei Ecken von Tübbingdichtungen. Hier kommt es regelmäßig zu einer theoretischen Volumenausnutzung von >100%. Durch Einsatz von elastischen Mikrosphären gemäß der Erfindung können die maximalen Rückstellkräfte erheblich reduziert werden, ohne dass die sich Dichtleistung z.B. bei größeren Spalten und/oder Versätzen verschlechtert. Bei dem erfindungsgemäßen Dichtungs- oder Dämpfungsprofil kann bei gleichbleibender oder sogar verminderter maximaler Rückstellkraft eine höhere Verpressung erzielt werden. Durch die verminderten maximalen Rückstellkräfte können erfindungsgemäße Dichtungs- oder Dämpfungsprofile darüber hinaus in Einsatzgebieten Verwendung finden, in denen dies bislang nicht möglich war. Beispielsweise kann die Verpressung im Tunnel- oder Tiefbaubereich von üblicherweise 20-50% bei gleichbleibenden maximalen Rückstellkräften auf 20-60 oder sogar 65% erhöht werden, wodurch sich der Arbeitsbereich derartiger Dichtungen beträchtlich erweitert wird.

Darüber hinaus können bei dem erfindungsgemäßen Dichtungs- oder Dämpfungsprofil die Federeigenschaften der elastischen Mikrosphären mit denen des Elastomers gekoppelt werden. Bei Dichtungs- oder Dämpfungsprofilen, wie sie im Gleisoberbau eingesetzt werden, z.B. Schienenunterlagen, Gleisbettmatten, Fußprofilen und dergleichen, werden die Federeigenschaften bislang durch Hohlräume in Extrusionsrichtung erzielt. Durch Einsatz von Mikrosphären, zum Beispiel Mikrosphären mit einem Durchmesser von 80-120 µm, können die Hohlräume konstruktiv besser ausgeführt werden. Auch ein gänzlicher Verzicht auf solche Hohlräume ist möglich, so dass deren Federeigenschaften von den Mikrosphären übernommen werden.

Erfindungsgemäße Dichtungs- oder Dämpfungsprofil können auch vorteilhaft bei Fenster- und Türfassaden eingesetzt werden. Bislang werden Profile aus massivem Elastomer und/oder Moosgummi verwendet. Massives Elastomer weist jedoch einen vergleichsweise niedrigen Wärmeleitwiderstand auf und Moosgummi kann aufgrund der geringen mechanischen Festigkeit nur für isolierende und dichtende Aufgaben, nicht jedoch für konstruktive Zwecke verwendet werden. Hier ermöglicht es die Erfindung, Elastomerprofile mit deutlich verbesserter Wärmeisolierung, aber im Wesentlichen gleich bleibender mechanischer Stabilität bereitzustellen.

Unter einem "quervernetzten Elastomer" werden Elastomere verstanden, deren Molekülketten im Gegensatz zu thermoplastischen Elastomeren untereinander kovalent vernetzt sind. "Elastomere" sind alle Werkstoffe, die gummielastische Eigenschaften aufweisen, also formfeste, aber elastisch verformbare Kunststoffe, deren Glasübergangspunkt sich unterhalb der Raumtemperatur befindet. Beispiele für quervernetzte Elastomere sind Styrol-Butadien-Kautschuk (SBR), Acrylnitril-Butadien-Kautschuk (NBR) und Ethylen-Propylen-Kautschuk (EPM, EPDM).

Unter dem Begriff "elastische Mikrosphären" werden kleine sphärisch geformte elastisch verformbare Kunststoffpartikel verstanden, die eine einen Hohlraum begrenzende Polymerhüllschicht aufweisen. Der Hohlraum kann ein Treibgas enthalten, z.B. Isopentan, Isooktan oder Isobutan. Insbesondere werden hier expandierbare Mikrosphären unter dem Begriff verstanden, d.h. Mikrosphären, die z.B. unter Wärmeeinwirkung (z.B. bei 80-190 °C) ihr Volumen stark erhöhen. Mikrosphären weisen im expandierten Zustand Durchmesser im Mikrometerbereich, z.B. von 10-150 µm, auf. Elastische Mikrosphären sind komprimierbar und nehmen bei nachlassendem Druck ihre ursprüngliche Form im Wesentlichen wieder an.

Unter einem "Dichtungs- oder Dämpfungsprofil" wird hier ein Elastomerprofil mit Dichtungs- oder Dämpfungsfunktion verstanden, beispielsweise Tübbingdichtungen, Betonrohrdichtungen, Schachtdichtungen, Keildichtungen, integrierte Dichtungen, Rollringe, Schienenunterlagen wie z.B. Rillenschienenlagerungen, Gleisbettmatten, Spurrillendichtprofile, Fußprofile, Verglasungsprofile für Fenster und Türen, Dichtungsprofile für Fenster und Türen, Fassadendichtungsprofile, Lärmschutzdichtungen und dergleichen.

In einer bevorzugten Ausführungsform weist das erfindungsgemäße Dichtungs- oder Dämpfungsprofil eine Härte auf, die derjenigen eines für denselben Einsatzzweck vorgesehenen mikrosphärenfreien Dichtungs- oder Dämpfungsprofils, wie es bislang im Stand der Technik verwendet wird, im Wesentlichen entspricht. Hierzu kann es erforderlich sein, die Shore-Härte des quervernetzten Elastomers entsprechend zu erhöhen, um einen durch den Mikrosphärenanteil bewirkten Härteverlust auszugleichen.

Der Anteil an Mikrosphären beträgt vorzugsweise 0,25 bis 2 Gew.-%, weiter bevorzugt 0,25 bis 1,5 Gew.-%, weiter bevorzugt 0,25 bis 1,0 Gew.-%, und besonders bevorzugt 0,25 bis 0,75 Gew.-%, 0,25 bis 0,5 Gew.-%, 0,25 bis 0,4 Gew.-% oder 0,25 bis 0,3 Gew.-%. Es handelt sich dabei um den Gewichtsanteil unexpandierter Mikrosphären am Gesamtgewicht der Ausgangsmischung aus quervernetztem Elastomer und unexpandierten Mikrosphären. Es hat sich herausgestellt, dass die genannten Mengenbereiche eine vorteilhafte Reduktion der spezifischen Dichte bzw. der maximalen Rückstellkraft ergeben, ohne die sonstigen mechanischen Eigenschaften des erfindungsgemäßen Dichtungs- oder Dämpfungsprofils nachteilig zu beeinflussen. Für Tübbingdichtungen bzw. Tübbingdichtungsrahmen hat sich beispielsweise ein Bereich von 0,25 bis 1,0 Gew.-%, für Tiefbaudichtungen wie Betonrohrdichtungen, Keildichtungen, integrierte Dichtungen, Rollringe etc. von 0,25 bis 0,5 %, und für Schienenunterlagen, Gleisbettmatten, Fußprofile etc. von 0,25 bis 2,0 Gew.-% als besonders geeignet herausgestellt.

In einer weiteren bevorzugten Ausführungsform der vorliegenden Erfindung weisen die Mikrosphären im expandierten Zustand einen Durchmesser von 40-120 µm, vorzugsweise von 40-80 µm oder 80-120 µm auf. Die Angaben beziehen sich dabei auf Mittelwerte. Eine Charge von Mikrosphären mit z.B. einem Durchmesser von 60 µm weist eine entsprechende Größenverteilung auf, wobei der Durchmesser im Mittel etwa 60 µm beträgt. Mikrosphären mit einem Durchmesserbereich von 40 bis 80 µm im expandierten Zustand sind beispielsweise gut für Profile geeignet, die im Tunnelbau, z.B. als Tübbingdichtungen, oder auch für im Tiefbau, z.B. als Betonrohrdichtungen, eingesetzt werden. Durch Verwendung von Mikrosphären mit einem Durchmesser von 80 bis 120 µm im expandierten Zustand können beispielsweise Elastomerprofile für den Gleisoberbau, z.B. Gleisbettmatten und dergleichen, mit vorteilhaften Federeigenschaften hergestellt werden. Natürlich sind auch Kombinationen dieser Durchmesserbereiche möglich. Bevorzugt werden für ein Profil jeweils Mikrosphären mit einem bestimmten mittleren Durchmesser, z.B. 40, 60, 80 oder 120 µm, eingesetzt. Es können aber auch Mischungen aus Mikrosphären mit verschiedenen Durchmessern eingesetzt werden.

Die Mikrosphären sind bevorzugt gleichmäßig über den Querschnitt des Dichtungs- oder Dämpfungsprofils verteilt. Es sind aber auch ungleichmäßige Verteilungen möglich, z.B. in Form eines Gradienten, von Clustern und dergleichen.

Die Mikrosphären können beispielsweise eine Acrylnitrilhülle aufweisen und ein Treibgas wie beispielsweise Isobutan, Isopentan oder Isooktan, enthalten. Mikrosphären dieses Typs weisen gute Federeigenschaften auf, die auch über einen längeren Zeitraum und bei längerer Verpressung nicht verloren gehen. Die Dicke der Acrylnitrilhülle kann variieren und dem Zweck entsprechend angepasst werden, wobei die Dicke der Hülle vorzugsweise mit steigendem Durchmesser zunimmt.

Das erfindungsgemäße Dichtungs- oder Dämpfungsprofil kann mit oder ohne die im Stand der Technik bekannten Hohlräume in Extrusionsrichtung ausgebildet sein. In einer bevorzugten Ausführungsform wird jedoch auf derartige Hohlräume verzichtet, so dass deren Aufgabe von den Mikrosphären übernommen wird.

Vorzugsweise handelt es sich bei dem quervernetzten Elastomer, das für das erfindungsgemäße Dichtungs- oder Dämpfungsprofil verwendet wird, um EPM, EPDM, NBR oder SBR. Es sind aber auch andere dem Fachmann bekannte quervernetzte Elastomere in vorteilhafter Weise einsetzbar.

In einem weiteren Aspekt betrifft die Erfindung auch ein Verfahren zur Herstellung eines erfindungsgemäßen Dichtungs- oder Dämpfungsprofils, wobei das Verfahren die folgenden Schritte umfasst: a) Mischen des quervernetzten Elastomers mit den unexpandierten elastischen Mikrosphären und b) Extrudieren der Mischung aus dem quervernetztem Elastomer und den unexpandierten elastischen Mikrosphären. In einer bevorzugten Ausführungsform des erfindungsgemäßen Verfahrens erfolgt anschließend noch ein weiterer Schritt, nämlich das c) Vulkanisieren der extrudierten Mischung aus dem quervernetztem Elastomer und den unexpandierten elastischen Mikrosphären.

Die Mikrosphären werden dabei in unexpandiertem Zustand mit einem Anteil von maximal 2 Gew.-%, vorzugsweise 0,25-2 Gew.-%, weiter bevorzugt 0,25-1,5 Gew.-%, weiter bevorzugt 0,25-1,0 Gew.-%, weiter bevorzugt 0,25-0,75 Gew.-% und besonders bevorzugt 0,25-0,5 Gew.-%, 0,25-0,4 Gew.-% oder 0,25-0,3 Gew.-%, bezogen auf das Gewicht der Mischung aus den Mikrosphären und der Rohmischung, bestehend aus dem Elastomer und gegebenenfalls weiteren Zusätzen, dem quervernetzten Elastomer beigemischt. Das Temperaturniveau wird beim Mischen unterhalb der Expansionstemperatur der Mikrosphären, die z.B. bei 80 bis 120°C liegen kann, gehalten. Anschließend erfolgt die Extrusion oberhalb der Expansionstemperatur für die Mikrosphären, z.B. bei >120 C, wobei die Mikrosphären infolge der Hitzeeinwirkung stark expandieren und ihr Zielvolumen erreichen. Anschließend kann das Profil vulkanisiert werden.

Die Erfindung wird im Folgenden anhand der Figuren beispielhaft näher erläutert.
Figur 1 Querschnitt durch eine Tübbingdichtung.
Figur 2 Seitliche Draufsicht auf den Eckbereich eines Tübbingdichtungsrahmens.

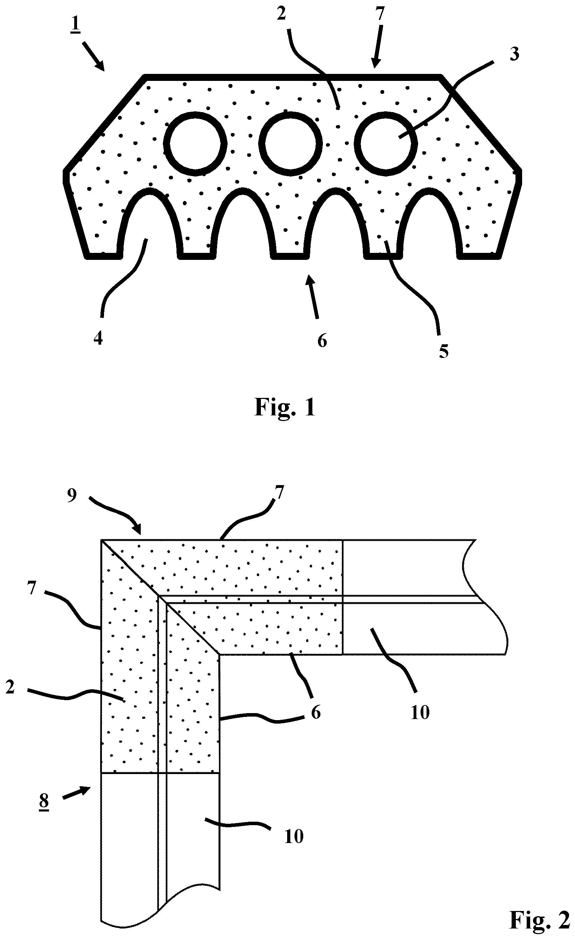

In Figur 1 ist schematisch ein Querschnitt durch eine strangförmige Tübbingdichtung 1 gezeigt. Solche eine Tübbingdichtung 1 wird mit der Dichtungsbasis 6 in eine entsprechende Nut eines Tübbings eingesetzt. Die gegenüberliegende Seite 7 der Tübbingdichtung 1 liegt im Einsatz der entsprechenden Seite 7 einer anderen Tübbingdichtung 1 des jeweils angrenzenden Tübbings an. Die Dichtungsbasis 6 weist Rillennuten 4 auf, wodurch Dichtrippen 5 gebildet sind. Darüber hinaus sind in dem Dichtungskörper in Längsrichtung, d.h. in Extrusionsrichtung, verlaufende kanalartige Hohlräume 3 vorgesehen. Bei der dargestellten Tübbingdichtung 1 sind als Punkte dargestellte Mikrosphären 2 gleichmäßig über den Querschnitt verteilt. Die Tübbingdichtung 1 weist dabei eine geschlossen Oberfläche auf.

In Figur 2 ist ein Eckbereich eines Tübbingdichtungsrahmens 8 in einer seitlichen Draufsicht dargestellt. Die in die Tübbingnut einzusetzende Dichtungsbasis 6 befindet sich hier rechts bzw. unten, die die künftige Kontaktfläche zu einer anderen Tübbingdichtung bildende gegenüberliegende Seite 7 links bzw. oben. Dargestellt ist der Bereich einer Rahmenecke 9 des Tübbingdichtungsrahmens 8. Solche Rahmenecken 9 werden regelmäßig nachträglich mit Dichtungssträngen 10 verbunden und weisen keine Hohlräume 3 auf. Bei dem hier dargestellten Tübbingdichtungsrahmen 8 sind die Rahmenecken 9 mit Mikrosphären 2 versehen, wodurch die Rahmenecke 9 stärker verpresst werden kann, ohne dass die Rückstellkräfte stark ansteigen und möglicherweise eine Schädigung der Nut oder des angrenzenden Tübbingkörpers verursachen. In der hier dargestellten Ausführungsform sind die Dichtungsstränge 10 nicht mit Mikrosphären ausgestattet.

### Ausführungsbeispiel

Einer EPDM-Rohmischung wurden 0,3 Gew.-%, bezogen auf das Endgemisch aus Rohmischung und Mikrosphären, treibgasgefüllte Mikrosphären mit Acrylnitrilhülle mit einem mittleren Durchmesser von 40 µm beigemischt. Die Rohmischung wurde extrudiert und anschließend vulkanisiert, um eine Tübbingdichtung herzustellen. Eine mikroskopische Analyse zeigte eine gleichmäßige Verteilung der Mikrosphären über den Dichtungsquerschnitt. Die Außenflächen der Dichtung waren geschlossen. Gegenüber einer Vergleichsdichtung ohne Mikrosphären ergab sich eine Material- und Gewichtsersparnis von etwa 30 %. Die Dichtung zeigte bei hoher Verpressung geringere maximale Rückstellkräfte als eine Vergleichsdichtung ohne Mikrosphären. Die Dichtfunktion war nicht beeinträchtigt.

## Patentansprüche

1. Dichtungs- oder Dämpfungsprofil für den Einsatz beim Tunnelbau, Tiefbau und/oder Gleisoberbau, wobei das Dichtungs- oder Dämpfungsprofil (1) aus einem quervernetzten Elastomer besteht und einen Anteil von maximal zwei Gewichtsprozent elastischer Mikrosphären (2) aufweist.

2. Dichtungs- oder Dämpfungsprofil nach Anspruch 1, **dadurch gekennzeichnet, dass** das Dichtungs- oder Dämpfungsprofil (1) im Vergleich zu einem mikrosphärenfreien Dichtungs- oder Dämpfungsprofil für denselben Einsatzzweck eine im Wesentlichen gleiche Härte aufweist.

3. Dichtungs- oder Dämpfungsprofil nach Anspruch 1 oder 2, **dadurch gekennzeichnet, dass** der Anteil elastischer Mikrosphären (2) 0,25-2 Gew.-%, bevorzug 0,25-1,5 Gew.-%, weiter bevorzugt 0,25-1,0 Gew.-%, weiter bevorzugt 0,25-0,75 Gew.-%, besonders bevorzugt 0,25-0,5 Gew.-%, 0,25-0,4 Gew.-% oder 0,25-0,3 Gew.-% beträgt.

4. Dichtungs- oder Dämpfungsprofil nach einem der vorhergehenden Ansprüche, **dadurch gekennzeichnet, dass** die Mikrosphären (2) einen durchschnittlichen Durchmesser von 40-120 µm, vorzugsweise von 40-80 µm oder 80-120 µm aufweisen.

5. Dichtungs- oder Dämpfungsprofil nach einem der vorhergehenden Ansprüche, **dadurch gekennzeichnet, dass** die Mikrosphären (2) gleichmäßig über den Querschnitt des Dichtungs- oder Dämpfungsprofils (1) verteilt sind.

6. Dichtungs- oder Dämpfungsprofil nach einem der vorhergehenden Ansprüche, **dadurch gekennzeichnet, dass** es sich bei den Mikrosphären (2) um treibgasgefüllte Mikrosphären mit Acrylnitrilhülle handelt.

7. Dichtungs- oder Dämpfungsprofil nach einem der vorhergehenden Ansprüche, **dadurch gekennzeichnet, dass** das Dichtungs- oder Dämpfungsprofil (1) keine Hohlräume (2) in Extrusionsrichtung aufweist.

8. Dichtungs- oder Dämpfungsprofil nach einem der vorhergehenden Ansprüche, **dadurch gekennzeichnet, dass** es sich bei dem quervernetzten Elastomer um EPM, EPDM, NBR oder SBR handelt.

9. Verfahren zur Herstellung eines Dichtungs- oder Dämpfungsprofils nach einem der Ansprüche 1 bis 8, umfassend die Schritte des a) Mischens des quervernetzten Elastomers mit unexpandierten expandierbaren elastischen Mikrosphären und b) Extrudierens der Mischung aus dem quervernetztem Elastomer und den unexpandierten expandierbaren elastischen Mikrosphären oberhalb der Expansionstemperatur für die expandierbaren Mikrosphären, so dass die Mikrosphären expandieren.

10. Verfahren nach Anspruch 9, ferner umfassend den Schritt des c) Vulkanisierens der extrudierten Mischung aus dem quervernetztem Elastomer und den nach Extrusion expandierten elastischen Mikrosphären.

11. Verwendung eines Dichtungs- oder Dämpfungsprofils nach einem der Ansprüche 1 bis 8 im Tunnelbau, Tiefbau oder Gleisoberbau, bevorzugt als Tübbingdichtung, Betonrohrdichtung, Schachtdichtung oder Schienenunterlage.

## Claims

1. A sealing or damping profiled element for use in tunnel construction, civil engineering and/or track superstructure, wherein the sealing or damping profile (1) comprises a crosslinked elastomer and a proportion of a maximum of two percent by weight elastic microspheres (2).

2. The sealing or damping profiled element according to claim 1, **characterized in that** the sealing or damping profiled element (1) has a substantially equal hardness by comparison with a microsphere-free sealing or damping profile for the same intended application.

3. The sealing or damping profiled element according to claim 1 or 2, **characterized in that** the proportion of elastic microspheres (2) is 0.25-2 % by wt., preferably 0.25-1.5 % by wt., more preferably 0.25 to 1.0 % by wt., more preferably 0.25-0.75 % by wt., particularly preferably 0.25-0.5 % by wt., 0.25-0.4 % by wt. or 0.25-0.3 % by wt.

4. The sealing or damping profiled element according to one of the preceding claims, **characterized in that** the microspheres (2) have an average diameter of 40-120 µm, preferably of 40-80 µm or 80-120 µm.

5. The sealing or damping profiled element according to one of the preceding claims, **characterized in that** the microspheres (2) are uniformly distributed over the cross-section of the sealing or damping profiled element (1).

6. The sealing or damping profiled element according to one of the preceding claims, **characterized in that** the microspheres (2) are propellant-filled microspheres with an acrylonitrile sheath.

7. The sealing or damping profiled element according to one of the preceding claims, **characterized in that** the sealing or damping profiled element (1) has no cavities (2) in the extrusion direction.

8. The sealing or damping profiled element according to one of the preceding claims, **characterized in that** the crosslinked elastomer is EPM, EPDM, NBR or SBR.

9. A method for producing a sealing or damping profiled element according to one of claims 1 to 8 comprising the steps of a) mixing the cross-linked elastomer with unexpanded expandable elastic microspheres and b) extruding the mixture of the cross-linked elastomer and the unexpanded expandable elastic microspheres above the expansion temperature for the expandable microspheres, so that the microspheres expand.

10. The method according to claim 9, further comprising the step of c) vulcanizing the extruded mixture of the crosslinked elastomer and the elastic microspheres expanded following extrusion.

11. Use of a sealing or damping profiled element according to one of claims 1 to 8 in tunnel construction, civil engineering or track superstructure, preferably as a lining seal, concrete pipe seal, shaft seal or track support.

## Revendications

1. Profilé d'étanchéité ou d'amortissement destiné à l'utilisation pour la construction de tunnels, dans le génie civil et/ou dans les superstructures ferroviaires, le profilé d'étanchéité ou d'amortissement (1) étant constitué d'un élastomère réticulé et comportant une part d'un maximum de deux pour cent en poids de microsphères élastiques (2).

2. Profilé d'étanchéité ou d'amortissement selon la revendication 1, **caractérisé en ce qu'**en comparaison d'un profilé d'étanchéité ou d'amortissement (1) exempt de microsphères, le profilé d'étanchéité ou d'amortissement fait preuve d'une dureté sensiblement identique pour le même usage.

3. Profilé d'étanchéité ou d'amortissement selon la revendication 1 ou 2, **caractérisé en ce que** la part de microsphères élastiques (2) est de 0,25 à 2 % en poids, de préférence de 0,25 à 1,5 % en poids, de manière plus préférentielle de 0,25 à 1,0 % en poids, de manière plus préférentielle de 0,25 à 0,75 % en poids, de manière particulièrement préférentielle de 0,25 à 0,5 % en poids, de 0,25 à 0,4 % en poids ou de 0,25 à 0,3 % en poids.

4. Profilé d'étanchéité ou d'amortissement selon l'une quelconque des revendications précédentes, **caractérisé en ce que** les microsphères (2) présentent un diamètre moyen de 40 à 120 µm, de préférence de 40 à 80 µm ou de 80 à 120 µm.

5. Profilé d'étanchéité ou d'amortissement selon l'une quelconque des revendications précédentes, **caractérisé en ce que** les microsphères (2) sont régulièrement distribuées sur la section transversale du profilé d'étanchéité ou d'amortissement (1).

6. Profilé d'étanchéité ou d'amortissement selon l'une quelconque des revendications précédentes, **caractérisé en ce que** les microsphères (2) sont des microsphères remplies de gaz propulseur, avec une enveloppe en acrylonitrile.

7. Profilé d'étanchéité ou d'amortissement selon l'une quelconque des revendications précédentes, **caractérisé en ce que** le profilé d'étanchéité ou d'amortissement (1) ne comporte aucune cavité (2) dans la direction d'extrusion.

8. Profilé d'étanchéité ou d'amortissement selon l'une quelconque des revendications précédentes, caractérisé en ce l'élastomère réticulé est de l'EPM, de l'EPDM, du NBR ou du SBR.

9. Procédé, destiné à la fabrication d'un profilé d'étanchéité ou d'amortissement selon l'une quelconque des revendications 1 à 8, comprenant les étapes a) du mélange de l'élastomère réticulé avec des microsphères élastiques expansibles non expansées et b) de l'extrusion du mélange composé de l'élastomère réticulé et des microsphères élastiques expansibles non expansées au-delà de la température d'expansion pour les microsphères expansibles, de telles sorte que les microsphères subissent une expansion.

10. Procédé selon la revendication 9, comprenant par ailleurs l'étape c) de la vulcanisation du mélange expansé composé de l'élastomère réticulé et des microsphères élastiques expansées après extrusion.

11. Utilisation d'un profilé d'étanchéité ou d'amortissement selon l'une quelconque des revendications 1 à 8 pour la construction de tunnels, dans le génie civil et/ou dans les superstructures ferroviaires, de préférence en tant que joint de cuvelage, en tant que joint de tube en béton, en tant que joint de puits ou en tant que support de rails.
